# EUROPÄISCHE PATENTSCHRIFT

(11) **EP 1 106 962 B1**
(45) Veröffentlichungstag und Bekanntmachung des Hinweises auf die Patenterteilung: **03.03.2010**
(21) Anmeldenummer: 00123959.9
(22) Anmeldetag: 03.11.2000
(51) Int. Cl.: G01B 7/00, G01D 5/14, G01D 5/16, G01D 5/20

(54) **Schnellkupplung**
Quick-release coupling
Raccord rapide

(30) Priorität: 10.12.1999 DE 19959664
(43) Veröffentlichungstag der Anmeldung: 13.06.2001
(73) Patentinhaber: Bayerische Motoren Werke Aktiengesellschaft, 80809 München (DE)
(72) Erfinder: Bräutigam-Wenzl, Ernst, 85417 Marzling (DE); Roschitz, Harald, 85386 Eching (DE); Schmidt, Rolf, 80809 München (DE)

(56) Entgegenhaltungen:
- EP-A- 0 306 979
- EP-A- 0 631 057
- EP-A- 0 725 242
- DE-A- 4 339 894
- GB-A- 2 270 758
- JP-A- 63 009 109
- JP-A- 63 196 018
- US-A- 5 078 411
- PATENT ABSTRACTS OF JAPAN vol. 2000, no. 03, 30. März 2000 (2000-03-30) & JP 11 338246 A (CANON INC), 10. Dezember 1999 (1999-12-10)
- PATENT ABSTRACTS OF JAPAN vol. 013, no. 513 (E-847), 16. November 1989 (1989-11-16) & JP 01 207908 A (SUMITOMO ELECTRIC IND LTD), 21. August 1989 (1989-08-21)
- PATENT ABSTRACTS OF JAPAN vol. 2000, no. 01, 31. Januar 2000 (2000-01-31) & JP 11 294596 A (HITACHI LTD;HITACHI TECHNO ENG CO LTD), 29. Oktober 1999 (1999-10-29)

## Beschreibung

Die Erfindung bezieht sich auf eine Schnellkupplung mit den Merkmalen von Patentanspruch 1.

Eine derartige Schnellkupplung ist beispielsweise notwendig, um die Lage eines Druckschlauchs zu bestimmen, der an einer Druckleitung angeschlossen wird. Aufgrund der in der Druckleitung herrschenden hohen Drücke bis zu 100 bar ist der ordnungsgemäße Sitz des Druckschlauchs unerläßlich. Andererseits ist gerade im Rahmen der mechanischen Fertigung von außen nicht mit bloßem Auge erkennbar, ob der Druckschlauch tatsächlich die Verrastungsstellung besitzt. Auch der Einsatz von mechanischen Meßgeräten ist, insbesondere dann, wenn die Dichtung einen relativ geringen Raum einnimmt und zwischen der Raststellung und einer dieser unmittelbar vorausgehenden Stellung ein nur unwesentlicher mechanischer Unterschied besteht, nicht zielführend.

Aus der EP 0 725 242 A1 ist eine Dichtungsanordnung zur Abdichtung eines Wälzlagers in der Radnabe eines Kraftfahrzeugs bekannt, die zudem die Erfassung von Drehbewegungen des Fahrzeugrads ermöglicht. Zur Erfassung der Drehbewegung eines drehfest mit einem Fahrzeugrad verbundenen Außenrings ist ein Multipolring vorgesehen. Der Multipolring besteht aus einem magnetisierten Elastomerwerkstoff und weist in Umfangsrichtung aufeinanderfolgende, sich in radialer Richtung erstreckende Nord- und Südpole auf, die sich bei Drehbewegung des Fahrzeugrads abwechselnd am Drehzahlsensor vorbeibewegen. Die Übermittlung der Drehbewegung durch den Multipolring des Dichtrings an einen Drehzahlsensor sei während einer langen Gebrauchsdauer von gleichbleibend hoher Präzision.

Die EP 0 631 057 A1 betrifft einen pneumatisch angetriebenen Kolben, der sich in einem Gehäuse bewegt. Das Gehäuse ist an zwei Stellen mit jeweils einem Magnetfeldaufnehmer versehen, um zu erfassen, ob sich ein am Kolben befestigter Permanentmagnet unter dem Magnetfeldaufnehmer befindet. Die Druckschrift beschäftigt sich mit der Aufgabe eine Dichtung zu schaffen, die weniger Einzelteile aufweist und einfacher und kostengünstiger herstellbar ist. Zur Lösung dieser Aufgabe wird die bekannte Dichtung dadurch weitergebildet, dass der bekannte Tragkörper einstückig ausgebildet und mit dem Permanentmagneten verbunden ist.

Der Erfindung liegt die Aufgabe zugrunde, die korrekte Montage einer Schnellkupplung zuverlässig zu überwachen.

Die Erfindung löst diese Aufgabe mit den Merkmalen des Patentanspruchs 1.

Die Dichtung erhält nunmehr eine wesentliche Funktion im Rahmen der Zuverlässigkeitsprüfung. Durch ihre Magnetisierung wird es möglich, die magnetischen Feldlinien im Bereich der Dichtung festzustellen. Handelt es sich beispielsweise bei der Dichtung um einen O-Ring, kann der Verlauf der Feldlinien sowohl innerhalb des von dem Ring umschlossenene Raums als auch von außen her festgestellt werden. Bereits geringfügige Abweichungen von der Sollage = Raststellung lassen sich aufgrund einer Änderung der magnetischen Feldlinien eindeutig erkennen und ggf. notwendige Nacharbeiten durchführen. Dadurch ist auch die Langzeitstabilität der Raststellung sichergestellt. Ein im Betrieb auftretendes, durch mechanische Beanspruchungen hervorgerufenes Lockern der Rastverbindung bei nicht ordnungsgemäßen Sitz kann sicher vermieden werden.

Anhand der Zeichnung ist die Erfindung weiter erläutert. Es zeigt
Fig. 1 einen Längsschnitt zweier miteinander verrastbarer Fahrzeugteile mit einer erfindungsgemäß ausgestalteten Dichtung bei ordnungsgemäßer Positionierung und
Fig. 2 die Anordung von Fig. 1 bei nicht exakter Positionierung der beiden Teile.

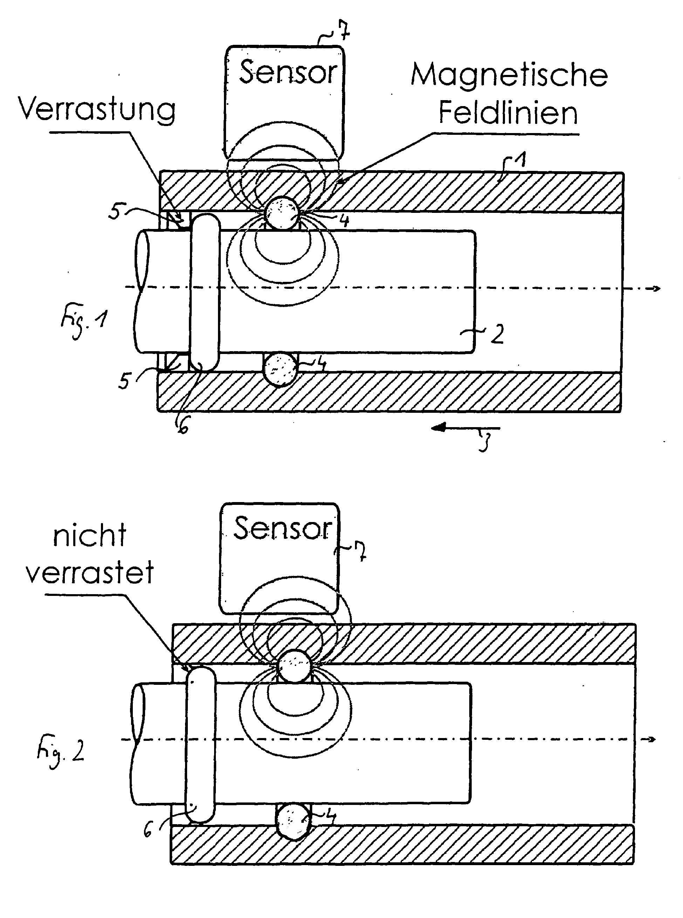

Fig. 1 zeigt eine sog. Schnellkupplung, mit der eine Hülse 1 und ein Anschlußstutzen 2 lösbar miteinander verrastet werden. Die Hülse 1 wird in Richtung eines Pfeiles 3 auf den feststehenden Anschlußstutzen aufgeschoben. Eine Dichtung 4, die in der Hülse 1 gehalten ist, dichtet die Verbindung nach außen ab. Bei ordnungsgemäßem Sitz hintergreift eine in der Hülse 1 sitzende Federklammer 5 einen Bund 6 des Abschlußstutzens. Bei nicht ordnungsgemäßem Sitz, wie in Fig. 2 dargestellt, ist die Federklammer 5 nicht als Rastmittel wirksam.

Zur Unterscheidung der beiden dargestellten Wirkpositionen ist die Dichtung 4 aus magnetischem Material hergestellt oder mit einer magnetischen Beschichtung versehen. Ein Magnetfeld-Sensor 7, der wie der Anschlußstutzen fest angeordnet ist, detektiert den Verlauf der magnetischen Feldlinien im Bereich der Dichtung 4 . Wie ohne weiteres zu erkennen, unterscheidet sich dieser Verlauf bei ordnungsgemäßem und nicht ordnungsgemäßem Sitz der Schnellkupplung. Bei ordnungsgemäßem Sitz der Schnellkupplung verlaufen die Feldlinien symmetrisch bezüglich des Sensors 7. Auf diese Weise ist eine eindeutige Aussage darüber möglich, ob die Verrastung der beiden Teile 1 und 2 miteinander wirksam ist.

## Patentansprüche

1. Schnellkupplung mit einer Hülse (1) und einem Anschlussstutzen (2), die lösbar miteinander verrastbar sind, wobei die Hülse eine magnetische Dichtung aufweist, die die Verbindung von Hülse und Anschlussstutzen in deren verrasteten Zustand nach außen hin abdichtet und die Schnellkupplung weiterhin einen Magnetfeld-Sensor (7) zur Detektion des Verlaufs der magnetischen Feldlinien aufweist, der wie der Anschlussstutzen fest angeordnet ist, so dass bei ordnungsgemäßem Sitz in der Rastposition die magnetischen Feldlinien der Dichtung symmetrisch bezüglich des Sensors verlaufen.

## Claims

1. A quick-release coupling with a sleeve (1) and a connecting piece (2), which can be releasably locked to one another, wherein the sleeve has a magnetic seal, which outwardly seals the connection of the sleeve and connecting piece in the locked state thereof and the quick-release coupling furthermore has a magnetic field sensor (7) for detecting the course of the magnetic field lines, which, like the connecting piece, is rigidly arranged, so that with a proper seat in the locking position, the magnetic field lines of the seal run symmetrically with respect to the sensor.

## Revendications

1. Raccord rapide comportant un manchon (1) et un ajutage de raccordement (2), accrochés de manière amovible l'un à l'autre,
le manchon ayant un joint magnétique assurant l'étanchéité vis-à-vis de l'extérieur pour la liaison entre le manchon et l'ajutage de raccordement en position verrouillée et l'embrayage rapide comporte en outre un capteur de champ magnétique (7) pour détecter le tracé des lignes de champ magnétique, ce capteur étant installé de manière solidaire comme l'ajutage de raccordement de façon qu'en cas de positionnement correct en position d'accrochage, les lignes de champ magnétique du joint, sont symétriques par rapport au capteur.
